# EUROPEAN PATENT SPECIFICATION

(11) **EP 4 760 640 B1**
(45) Date of publication and mention of the grant of the patent: **02.12.2026**
(21) Application number: 24219972.7
(22) Date of filing: 13.12.2024
(51) Int. Cl.: G06T 15/20, G06T 17/00

(54) **METHODS FOR RECONSTRUCTING AN ANIMATABLE 3D AVATAR FROM MONOCULAR IMAGES**
VERFAHREN ZUR REKONSTRUKTION EINES ANIMATIONSFÄHIGEN 3D-AVATARS AUS MONOKULAREN BILDERN
PROCÉDÉS DE RECONSTRUCTION D'UN AVATAR 3D ANIMABLE À PARTIR D'IMAGES MONOCULAIRES

(43) Date of publication of application: 17.06.2026
(73) Proprietor: TOYOTA JIDOSHA KABUSHIKI KAISHA, Aichi-ken, 471-8571 (JP)
(72) Inventor: GARATTONI, Lorenzo, 1140 BRUSSELS (BE); DAVOLI, Davide, 1140 BRUSSELS (BE); TANG, Jiapeng, 80333 MUNICH (DE); NIEßNER, Matthias, 80333 MUNICH (DE); SCHONEVELD, Liam, TOKYO 103-0022 (JP); CHEN, Zhe, TOKYO 103-0022 (JP)
(74) Representative: Cabinet Beau de Loménie

(56) References cited:
- KIRSCHSTEIN TOBIAS ET AL: "DiffusionAvatars: Deferred Diffusion for High-fidelity 3D Head Avatars", 2024 IEEE/CVF CONFERENCE ON COMPUTER VISION AND PATTERN RECOGNITION (CVPR), IEEE, 16 June 2024 (2024-06-16), pages 5481 - 5492, XP034698503, DOI: 10.1109/CVPR52733.2024.00524
- SHENHAN QIAN ET AL: "GaussianAvatars: Photorealistic Head Avatars with Rigged 3D Gaussians", ARXIV.ORG, CORNELL UNIVERSITY LIBRARY, 201 OLIN LIBRARY CORNELL UNIVERSITY ITHACA, NY 14853, 28 March 2024 (2024-03-28), XP091712637
- TANG JIAPENG ET AL: "GAF: Gaussian Avatar Reconstruction from Monocular Videos via Multi-view Diffusion", ARXIV.ORG, 1 December 2024 (2024-12-01), pages 1 - 18, XP093267934, Retrieved from the Internet <URL:https://arxiv.org/pdf/2412.10209>
- RUIQI GAO ET AL: "CAT3D: Create Anything in 3D with Multi-View Diffusion Models", ARXIV.ORG CORNELL UNIVERSITY LIBRARY, 201 OLIN LIBRARY CORNELL UNIVERSITY ITHACA, NY 14853, 16 May 2024 (2024-05-16), XP091758939
- XINYANG LI ET AL: "GGAvatar: Geometric Adjustment of Gaussian Head Avatar", ARXIV.ORG, CORNELL UNIVERSITY LIBRARY, 201 OLIN LIBRARY CORNELL UNIVERSITY ITHACA, NY 14853, 20 May 2024 (2024-05-20), XP091762348

## Description

### BACKGROUND OF THE INVENTION

### 1. Field of the Invention

The invention relates to the field of 3D image reconstruction. In particular, the invention relates to the reconstruction of an animatable 3D avatar of a subject from monocular images.

### 2. Description of Related Art

The generation of photorealistic and animatable avatars is an important challenge in a vast variety of applications such as immersive telepresence in virtual and augmented reality, computer games, movie effects, virtual classrooms, and videoconference.

In this context, it is generally useful to achieve rendering of an accurate representation of a subject, the avatar, from any viewpoint based on images of the subject. Further, it is generally useful to be able to animate such avatar so that the avatar shows various expressions, including expressions that are not known from the images of the subject.

Existing methods create animatable avatars using Neural Radiance Fields (NeRF) (see [REF 1]-[REF 2]) and Gaussian Splatting techniques (see [REF 3]). Further, some methods are based on the use of multi-view datasets (see [REF 4]-[REF 5]). Document KIRSCHSTEIN TOBIAS ET AL: "DiffusionAvatars: Deferred Diffusion for High-fidelity 3D Head Avatars", 2024 IEEE/CVF CONFERENCE ON COMPUTER VISION AND PATTERN RECOGNITION (CVPR), IEEE, 16 June 2024 (2024-06-16), pages 5481-5492, XP034698503, and "GGAvatar: Geometric Adjustment of Gaussian Head Avatar", Xinyang Li et al, 2024-05-20, both relate to methods that translate expressions of a morphable model into realistic facial appearances of a person. CAT3D ("CAT3D: Create Anything in 3D with Multi-View Diffusion Models" Gao et al., arXiv 2405.10314, May 2024) discloses a two-step method for 3D scene creation from a single input image: a multi-view latent diffusion model conditioned on camera pose raymaps generates a large set of geometrically consistent novel-view images, which are then used as pseudo-supervision to iteratively optimise a NeRF-based 3D representation.

However, these methods encounter significant limitations when tackling avatar reconstruction based on monocular recordings from commodity cameras, such as smartphone portrait videos. In particular, such models are only applicable when the subject is viewed from close-to-central views but exhibit poor results when rendering realistic extreme views (i.e. from sides) and novel expressions.

The following references also disclose various methods relating to 3D image reconstruction.
[REF 1] MILDENHALL, Ben, SRINIVASAN, Pratul P., TANCIK, Matthew, et al. Nerf: Representing scenes as neural radiance fields for view synthesis. Communications of the ACM, 2021, vol. 65, no 1, p. 99-106.
[REF 2] MÜLLER, Thomas, EVANS, Alex, SCHIED, Christoph, et al. Instant neural graphics primitives with a multiresolution hash encoding. ACM transactions on graphics (TOG), 2022, vol. 41, no 4, p. 1-15.
[REF 3] KERBL, Bernhard, KOPANAS, Georgios, LEIMKÜHLER, Thomas, et al. 3D Gaussian Splatting for Real-Time Radiance Field Rendering. ACM Trans. Graph., 2023, vol. 42, no 4, p. 139:1-139:14.
[REF 4] QIAN, Shenhan, KIRSCHSTEIN, Tobias, SCHONEVELD, Liam, et al. Gaussianavatars: Photorealistic head avatars with rigged 3d gaussians. In : Proceedings of the IEEE/CVF Conference on Computer Vision and Pattern Recognition. 2024. p. 20299-20309.
[REF 5] GIEBENHAIN, Simon, KIRSCHSTEIN, Tobias, RÜNZ, Martin, et al. Npga: Neural parametric gaussian avatars. In : SIGGRAPH Asia 2024 Conference Papers. 2024. p. 1-11.
[REF 6] QIAN, Shenhan. Versatile Head Alignment with Adaptive Appearance Priors, 2014, https://shenhanqian.github.io/
[REF 7] KINGMA, Diederik P. Auto-encoding variational bayes. arXiv preprint arXiv:1312.6114, 2013.
[REF 8] RADFORD, Alec, KIM, Jong Wook, HALLACY, Chris, et al. Learning transferable visual models from natural language supervision. In : International conference on machine learning. PMLR, 2021. p. 8748-8763.
[REF 9] GAO, Ruiqi, HOLYNSKI, Aleksander, HENZLER, Philipp, et al. Cat3d: Create anything in 3d with multi-view diffusion models. arXiv preprint arXiv:2405.10314, 2024.
[REF 10] SHI, Yichun, WANG, Peng, YE, Jianglong, et al. Mvdream: Multi-view diffusion for 3d generation. arXiv preprint arXiv:2308.16512, 2023.
[REF 11] ZIELONKA, Wojciech, BOLKART, Timo, et THIES, Justus. Instant volumetric head avatars. In : Proceedings of the IEEE/CVF Conference on Computer Vision and Pattern Recognition. 2023. p. 4574-4584.
[REF 12] XIANG, Jun, GAO, Xuan, GUO, Yudong, et al. Flashavatar: High-fidelity digital avatar rendering at 300fps. arXiv preprint arXiv:2312.02214, 2023.
[REF 13] KIRSCHSTEIN, Tobias, QIAN, Shenhan, GIEBENHAIN, Simon, et al. Nersemble: Multi-view radiance field reconstruction of human heads. ACM Transactions on Graphics (TOG), 2023, vol. 42, no 4, p. 1-14.

### SUMMARY OF THE INVENTION

According to aspects of the present disclosure, a computer-implemented method is provided in accordance with claim 1.

In the present method, the images of the pseudo-ground truth image set are used as pseudo-ground truth to supervise the optimization of the 3D geometric primitives of a subject. The 3D geometric primitives form a 3D representation of the subject constituting an avatar from which images can be rendered from any viewpoints.

In the present description, the subject may be any element that can be used as an avatar. For example, the subject may comprise a person or a part of the body of a person. The subject may also comprise elements of animals, plants or objects, including non-realistic elements, possibly artificially-generated.

In the present description, the morphable parametric representation is a representation of the subject that provides the ability to animate the reconstructed avatar so that the subject is viewed under any pose and is modified by any geometric deformation. In particular, the geometric deformation may be used so that the subject, for example a head, adopts any expression.

With the present method, it is possible to construct an accurate 3D avatar from a series of images captured from a single viewpoint. In an extreme case, the 3D avatar may also be reconstructed from a single image extracted from the monocular video.

Advantageously, the use of a multi-view diffusion model conditioned with geometric guidance based on normal maps enhances the accuracy and consistency of the 3D avatar reconstruction.

Further, compared to methods using only camera pose embeddings as disclosed for example in [REF 8], the use of normal maps offers a more explicit inductive bias for view synthesis by providing pixel-alignment between the generated images and the conditioning normal maps.

According to embodiments, the rendered image set comprises multiple rendered images of the subject under different target views.

According to embodiments, the pseudo-ground truth image set comprises multiple images of the subject corresponding to the different target views.

According to embodiments, the step of adjusting the 3D geometric primitives involves using a loss function evaluating differences between the rendered image set rendered from the target views and the pseudo-ground truth image set.

According to embodiments, the step of adjusting the 3D geometric primitives involves using a loss function evaluating differences between an image of the subject under the single reference view extracted from the monocular video and a rendered image rendered from the same reference view using the 3D geometric primitives.

According to embodiments, the step of generating a pseudo-ground truth image set of the subject under the target views based on an input image of the subject extracted from the monocular video using a multi-view diffusion model comprises:
- encoding the rendered image set into latent features of the multi-diffusion model, and add noise to the latent features to generate noisy latent features; and
- iteratively denoising the noisy latent features to generate the pseudo-ground truth image set.

Advantageously, the use of latent vectors obtained from rendered normal maps within the framework of multi-view diffusion model provide a stronger control signal for the generation of novel image view, which enhances the performance of the avatar reconstruction.

According to embodiments, the step of generating a pseudo-ground truth image set of the subject under the target views based on an input image of the subject extracted from the monocular video using a multi-view diffusion model comprises:
- encoding the input image into latent features of the multi-view diffusion model using a CLIP embedding; and
- encoding the normal maps into latent features of the multi-view diffusion model using a variational encoder.

According to embodiments, the resolution of the pseudo-ground truth image set is increased using a latent upsampler diffusion model receiving the output of the multi-view diffusion model.

The 3D geometric primitives are 3D Gaussians generated using a 3D Gaussian splatting reconstruction model. In embodiments, the 3D Gaussian splatting reconstruction model comprises the model disclosed in [REF 3] to represent 3D scenes of a subject.

According to embodiments, the parametric morphable representation of the subject is a 3D mesh generated based on the monocular video.

According to embodiments, the multi-view diffusion model is trained on a multi-view video dataset.

The present disclosure is further related to a computer program set including instructions for executing the steps of the above method when said program is executed by at least one computer. This program set can use any programming language and take the form of source code, object code or a code intermediate between source code and object code, such as a partially compiled form, or any other desirable form.

The present disclosure is further related to a recording medium readable by at least one computer and having recorded thereon a computer program including instructions for executing the steps of the above described method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram representing aspects of a method according to the present disclosure;
FIG. 2 is a block diagram of a method according to embodiments of the present disclosure;
FIGS. 3-4 are tables illustrating advantages of the method according to the present disclosure over other methods.

### DETAILED DESCRIPTION OF EMBODIMENTS

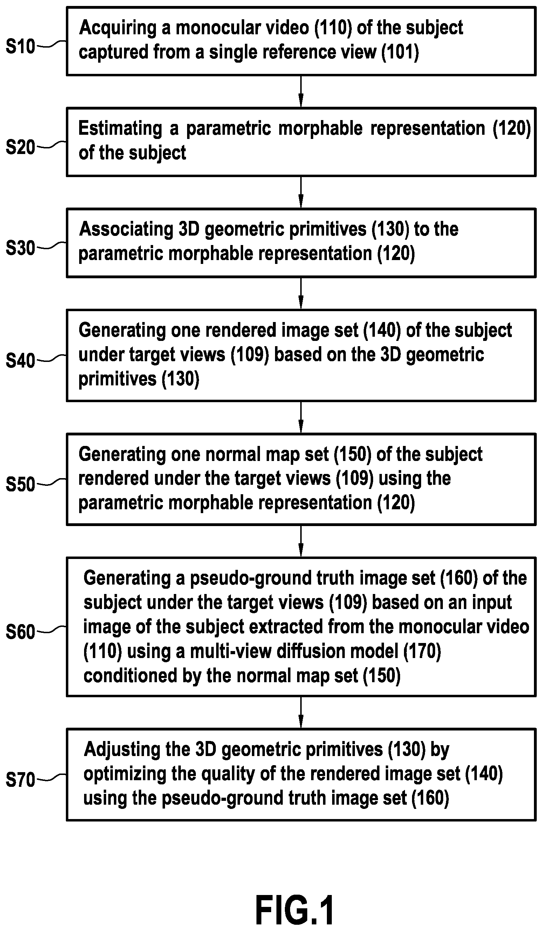

Methods and systems for reconstructing an animatable 3D avatar from monocular images, which constitute exemplary embodiments of the present disclosure, are now going to be presented in relation with FIGS.1-4.

FIGS. 1-2 show aspects of a method to reconstruct animatable 3D avatars from monocular images according to the present disclosure.

In a first step S10, a monocular video 110 set is provided. The monocular video 110 may comprise a series of images (frames) that are captured from a single reference point of view 101. Further, the images are two-dimensional images that do not comprise any depth information. For example, the monocular video 110 can be obtained using a detection system with a single camera.

The images of the monocular video 110 may represent at least a partial view of a subject. For example, the images may represent a head of a subject or part of a body of a subject. In embodiments, the images 110 represent elements of a subject that facilitate identification of the subject such as the head or the entire body. For the sake of conciseness and example, in the following the images are considered to represent the head of a subject but the present invention applies to any other aforementioned cases.

In step S20, a parametric morphable representation 120 (or parametric morphable model) of the head represented in the images is generated based on the monocular video 110.

The parametric morphable representation 120 of the head may be a 3D mesh, such as a FLAME mesh. The FLAME mesh may be obtained by processing the images of the monocular video 110 using a VHAP tracker (see [REF 6]).

In step S30, 3D primitives 130 of the head are associated ("rigged") to the parametric morphable representation 120 (see [REF 4]). The 3D primitives 130 are a 3D Gaussian splatting generated using a 3D Gaussian splatting reconstruction method (see [REF 3]).

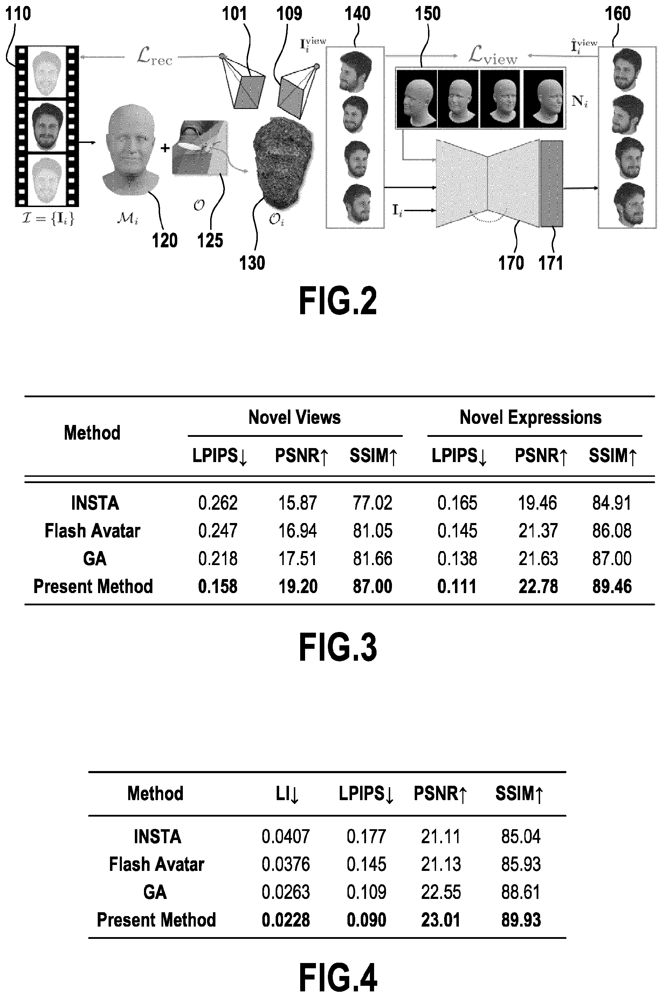

In embodiments, in order to animate the Gaussian splatting for head avatars, representations obtained from the "GaussianAvatars" models are used to rig 3D Gaussians based on the 3D FLAME mesh (see [REF 4]). The rigging process is represented as element 125 in Fig. 2.

In step S40, rendered images 140 of target views 109 of the head are rendered using the 3D geometric primitives 130. The rendered images may be inherently noisy but their quality is enhanced iteratively in step S70 by optimizing the accuracy of the 3D primitives 130.

In step S50, normal maps 150 forming a normal maps set are generated based on the parametric morphable representation 120. The normal maps 150 are rendered under the set of predetermined target views 109.

In step S60, a pseudo-ground truth image set 160 comprising images of the head represented under the target views is generated from a single input image, *Iᵢ*. The generation process utilizes a multi-view diffusion model 170 that takes as inputs an input image, *Iᵢ*, of the monocular video 110 and the normal map set 150 previously generated at step S50, and the rendered images 140.

In the generation process of step S60, the noisy rendered images 140 are encoded in latent representations of the multi-diffusion model 170, thus forming noisy latents. Further, the normal maps 150 rendered from the parametric morphable model 120 are leveraged as diffusion guidance.

In embodiments, the normal maps 150 are first encoded into a latent representation of the multi-view diffusion model 170 via a pretrained VAE model (see [REF 7]) matching the dimensionality of the noisy image latents. Then, the noisy image latents and the normal map latents are concatenated along a channel dimension. Compared to camera pose embeddings, normal maps offer a more explicit inductive bias for view synthesis by providing pixel-aligned conditioning, which facilitates alignment between the generated images and the conditioning maps.

In embodiments, the multi-view diffusion model 170 is previously trained to generate, from a single image of a subject, multiple novel views of the subject conditioned on normal maps 150 rendered from target views 109. Specifically, given an input image, *Iᵢ*, and a parametric morphable representation 120., the multi-view diffusion model 170 learns the joint distribution of a predetermined number of target rendered images 140, guided by normal maps 150, which are rendered from the parametric morphable model 120 at the target views 109. The architecture of the present multi-view diffusion model 170 may belong to the family of multi-view latent diffusion models (MVLDM), see for example [REF 9]-[REF 10]. However, contrary to the known models, the present model 170 is using normal maps 150 as multi-view diffusion priors to condition the generation of the novel views 160 which are used as pseudo-ground truth in the optimization of the 3D geometric primitives.

Further, in the present multi-view diffusion model 170, CLIP embeddings of the input image, *Iᵢ*, are used to achieve global control over the generation of novel views 160. However, in order to overcome the lack of detailed information inherent to such embeddings and achieve accurate capture of the subject's identity and appearance, the latents of the input image, *Iᵢ*, obtained from a VAE encoder are incorporated into the multi-view diffusion model 170. Additionally, in embodiments, cross-attention is applied between the multi-view denoised latents and the VAE latent of the input image in order to transfer identity-specific details. Further, information from the noisy latents across the different views are aggregated to ensure consistency across views.

In embodiments, a latent upsampler 171 is used to further enhance the details in the novel views (pseudo-ground truth images) 160 (for example the facial details). As an example, the latent upsampler 171 is used to resolve the denoised latents from a resolution of 32x32 to 64x64. This resolution enhancement step allows, for example, the novel views 160 to reach a final resolution of 512x512.

In step S70, the 3D reconstruction model is adjusted by comparing the novel views 160 generated by the multi-view diffusion model 170 to the rendered images 140 that are input in the multi-view diffusion model 140.

Further, in embodiments, the 3D reconstruction model is adjusted by comparing an image from the monocular video 110, captured under the single reference view 101, to a rendered image rendered under the same reference view 101 using the 3D primitives 130.

Figs.3-4 illustrates performance of the present method compared to known methods when addressing a task aiming at reconstructing a 3D avatar of a head from monocular images.

The metrics used to compare performance of the methods are: average L1 loss "L1", LPIPS, PSNR, SSIM. The direction of the arrows indicates if an enhancement of performance is achieved by a decrease (arrow pointing down) or an increase (arrow pointing up) of a value of the considered metrics. The metrics are evaluated between the rendered images and the ground truth images known from the test set.

The methods of the prior art to which the present method is compared are: INSTA (see [REF 11]), FlashAvatar (see [REF 12]); and GaussianAvatars "GA" (see [REF 4]).

In order to obtain the exemplary results presented in Figs.3-4, the multi-view diffusion model 170 is trained on a multi-view head video dataset derived from the NeRSemble dataset [REF 13]. The NeRSemble dataset comprises RGB video sequences from 16 viewpoints covering both front and side faces of a subject. In the present implementation, the training dataset is constructed by randomly sampling 50,000 timesteps from the NeRSemble dataset.

During inference, the head avatar reconstruction of Figs.3-4 are performed on two different monocular video datasets. In Fig. 3, the evaluation is performed using a monocular video sequence extracted from the NeRSemble dataset, using only a sequence of frames captured from a single viewpoint. The frames of the video sequences captured from the other (15) viewpoints are only used for evaluation purposes. In Fig. 4, the evaluation is performed on a monocular video data set consisting of 3 monocular videos from the INSTA dataset at 512x512 resolution, and 3 sequences of three subjects captured by smartphone at 1280x720 resolution.

In Fig. 3, quantitative comparisons of dynamic avatar reconstruction from the NeRSemble-derived monocular video sequence are illustrated using two settings. The first setting relates to "novel view synthesis" wherein an avatar is reconstructed with poses and expressions that have been seen during the training of the multi-view diffusion model 170 and images are rendered from 15 hold-out views. The second setting relates to "novel expression synthesis" wherein an avatar is reconstructed with poses and expressions that have not been seen during training of the multi-view diffusion model 170 (using the fact that the 3D Gaussian splatting is animatable) and images are rendered from 5 nearby hold-out views.

For both settings, results are obtained by performing the evaluation using the average of twelve video sequences of different subjects extracted from the NeRSemble dataset [REF 13]. The evaluation sequences are not seen by the multi-view diffusion model during training.

Results shown in Fig. 3 show that the present method surpasses all other methods across all the evaluated metrics with notable gains of 1.69dB in PSNR and a 5.34% increase in SSIM for novel view synthesis.

In Fig. 4, quantitative comparisons of dynamic avatar reconstruction from the INSTA-derived monocular video sequence are illustrated. In this case, since the evaluation dataset is inherently monocular, ground truth novel views are not known and animation results are evaluated by applying expression parameters from hold-out frames.

Results shown in Fig. 4 show that the present method surpasses all other methods across all evaluated metrics. The methods of the prior art struggle to generate plausible novel views, especially for previously unseen parts of the subject.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for reconstructing a 3D animatable avatar of a subject from a monocular video (110) comprising:
- (S10) acquiring a monocular video (110) of the subject captured from a single reference view (101);
- (S20) estimating a parametric morphable representation (120) of the subject based on the monocular video (110);
- (S30) associating 3D geometric primitives (130) to the parametric morphable representation (120) of the subject, the 3D geometric primitives constituting a 3D Gaussian splatting of the avatar; and
- (S40) generating one rendered image set (140) of the subject under target views (109) based on the 3D geometric primitives (130);
- (S50) generating one normal map set (150) of the subject rendered under the target views (109) using the parametric morphable representation (120);
- (S60) generating a pseudo-ground truth image set (160) of the subject under the target views (109) based on an input image of the subject extracted from the monocular video (110) using a multi-view diffusion model (170) conditioned by the rendered image set (140) and the normal map set (150); and
- (S70) iteratively adjusting the 3D geometric primitives (130) by iteratively optimizing the quality of the rendered image set (140) using the pseudo-ground truth image set (160), wherein the adjusting of the 3D geometric primitives contributes to reconstructing the 3D animatable avatar.

2. The method of claim 1, wherein the rendered image set (140) comprises multiple rendered images of the subject under different target views (109).

3. The method of claim 2, wherein the pseudo-ground truth image set (160) comprises multiple images of the subject corresponding to the different target views.

4. The method of any of claims 1 to 3, wherein the step of (S70) adjusting the 3D geometric primitives (130) involves using a loss function evaluating differences between the rendered image set (140) rendered from the target views (109) and the pseudo-ground truth image set (160).

5. The method of any of claims 1 to 4, wherein the step of (S70) adjusting the 3D geometric primitives (130) involves using a loss function evaluating differences between an image of the subject under the single reference view (101) extracted from the monocular video (110) and a rendered image of the subject rendered from the same reference view (101) using the 3D geometric primitives (130).

6. The method of any of claims 1 to 5, wherein the step of (S60) generating a pseudo-ground truth image set (160) of the subject under the target views based on an input image of the subject extracted from the monocular video (110) using a multi-view diffusion model (170) conditioned by the normal map set (150) comprises:
- encoding the rendered image set (140) into latent features of the multi-view diffusion model (170), and adding noise to the latent features to generate noisy latent features; and
- iteratively denoising the noisy latent features to generate the pseudo-ground truth image set (160).

7. The method of claim 6, wherein the step of (S60) generating a pseudo-ground truth image set (160) of the subject under the target views (109) based on an input image of the subject extracted from the monocular video (110) using a multi-view diffusion model (170) conditioned by the normal map set (150) comprises:
- encoding the input image into latent features of the multi-view diffusion model (170) using a CLIP embedding; and
- encoding the normal map set (150) into latent features of the multi-view diffusion model (170) using a variational encoder.

8. The method of any of claims 6 or 7, wherein the resolution of the pseudo-ground truth image set (160) is increased using a latent upsampler diffusion model (171) receiving the output of the multi-view diffusion model (170).

9. The method of any of claims 1 to 8, wherein the 3D geometric primitives are 3D Gaussians generated using a 3D Gaussian splatting reconstruction model.

10. The method of claim 9, wherein the parametric morphable representation (120) of the subject is a 3D mesh generated based on the monocular video (110).

11. The method of any of claims 1 to 10, wherein the multi-view diffusion model (170) is trained on a multi-view video dataset.

12. A 3D avatar reconstruction device comprising a processor configured to implement steps of the method according to any one of claims 1 to 11.

13. A computer program including instructions for executing the steps of the method according to any of claims 1 to 11 when said program is executed by a computer.

14. A recording medium readable by a computer and having recorded thereon a computer program including instructions for executing the steps of the method according to any of claims 1 to 11, when executed by a computer.

## Patentansprüche

1. Computerumgesetztes Verfahren zum Rekonstruieren eines animationsfähigen 3D-Avatars einer Zielperson aus einem monokularen Video (110), umfassend:
- (S10) Erfassen eines monokularen Videos (110) der Zielperson, das aus einer einzelnen Referenzansicht (101) aufgenommen wird;
- (S20) Schätzen einer parametrischen verformbaren Darstellung (120) der Zielperson basierend auf dem monokularen Video (110);
- (S30) Zuordnen von geometrischen 3D-Grundkörpern (130) zu der parametrischen verformbaren Darstellung (120) der Zielperson, wobei die geometrischen 3D-Grundkörper ein 3D-Gaussian-Splatting des Avatars bilden; und
- (S40) Erzeugen einer gerenderten Bildmenge (140) der Zielperson aus Zielansichten (109) basierend auf den geometrischen 3D-Grundkörpern (130);
- (S50) Erzeugen eines Normal-Map-Sets (150) der aus den Zielansichten (109) gerenderten Zielperson unter Verwendung der parametrischen verformbaren Darstellung (120);
- (S60) Erzeugen einer Pseudo-Grundwahrheits-Bildmenge (160) der Zielperson in den Zielansichten (109) basierend auf einem Eingabebild der Zielperson, das aus dem monokularen Video (110) extrahiert wird, unter Verwendung eines Mehrfachansicht-Diffusionsmodells (170), das durch die gerenderte Bildmenge (140) und das Normal-Map-Set (150) konditioniert wird; und
- (S70) iteratives Anpassen der geometrischen 3D-Grundkörper (130) durch iteratives Optimieren der Qualität der gerenderten Bildmenge (140) unter Verwendung der Pseudo-Grundwahrheits-Bildmenge (160), wobei das Anpassen der geometrischen 3D-Grundkörper zum Rekonstruieren des animationsfähigen 3D-Avatars beiträgt.

2. Verfahren nach Anspruch 1, wobei die gerenderte Bildmenge (140) mehrere gerenderte Bilder der Zielperson aus verschiedenen Zielansichten (109) umfasst.

3. Verfahren nach Anspruch 2, wobei die Pseudo-Grundwahrheits-Bildmenge (160) mehrere Bilder der Zielperson umfasst, die den verschiedenen Zielansichten entsprechen.

4. Verfahren nach einem der Ansprüche 1 bis 3, wobei der Schritt (S70) des Anpassens der geometrischen 3D-Grundkörper (130) das Verwenden einer Verlustfunktion einbezieht, die Unterschiede zwischen der gerenderten Bildmenge (140), die aus den Zielansichten (109) gerendert wird, und der Pseudo-Grundwahrheits-Bildmenge (160) bewertet.

5. Verfahren nach einem der Ansprüche 1 bis 4, wobei der Schritt (S70) des Anpassens der geometrischen 3D-Grundkörper (130) das Verwenden einer Verlustfunktion einbezieht, die Unterschiede zwischen einem Bild der Zielperson aus der einzelnen Referenzansicht (101), die aus dem monokularen Video (110) extrahiert wird, und einem gerenderten Bild der Zielperson, das aus der gleichen Referenzansicht (101) gerendert wird, unter Verwendung der geometrischen 3D-Grundkörper (130) bewertet.

6. Verfahren nach einem der Ansprüche 1 bis 5, wobei der Schritt (S60) des Erzeugens einer Pseudo-Grundwahrheits-Bildmenge (160) der Zielperson aus den Zielansichten basierend auf einem Eingabebild der Zielperson, das aus dem monokularen Video (110) extrahiert wird, unter Verwendung eines Mehrfachansicht-Diffusionsmodells (170), das durch das Normal-Map-Set (150) konditioniert wird, umfasst:
- Codieren der gerenderten Bildmenge (140) in latente Merkmale des Mehrfachansicht-Diffusionsmodells (170), und Hinzufügen von Rauschen zu den latenten Merkmalen, um verrauschte latente Merkmale zu erzeugen; und
- iteratives Entrauschen der verrauschten latenten Merkmale, um die Pseudo-Grundwahrheits-Bildmenge (160) zu erzeugen.

7. Verfahren nach Anspruch 6, wobei der Schritt (S60) des Erzeugens einer Pseudo-Grundwahrheits-Bildmenge (160) der Zielperson aus den Zielansichten (109) basierend auf einem Eingabebild der Zielperson, das aus dem monokularen Video (110) extrahiert wird, unter Verwendung eines Mehrfachansicht-Diffusionsmodells (170), das durch das Normal-Map-Set (150) konditioniert wird, umfasst:
- Codieren des Eingangsbildes in latente Merkmale des Mehrfachansicht-Diffusionsmodells (170) unter Verwendung von CLIP-Embedding; und
- Codieren des Normal-Map-Sets (150) in latente Merkmale des Mehrfachansicht-Diffusionsmodells (170) unter Verwendung eines Variationscodierers.

8. Verfahren nach einem der Ansprüche 6 oder 7, wobei die Auflösung der Pseudo-Grundwahrheits-Bildmenge (160) unter Verwendung eines latenten Aufwärtsabtaster-Diffusionsmodells (171), das die Ausgabe des Mehrfachansicht-Diffusionsmodells (170) empfängt, erhöht wird.

9. Verfahren nach einem der Ansprüche 1 bis 8, wobei die geometrischen 3D-Grundkörper gaußsche 3D-Grundkörper sind, die unter Verwendung eines Rekonstruktionsmodells mit Gaussian-3D-Splatting erzeugt werden.

10. Verfahren nach Anspruch 9, wobei die parametrische verformbare Darstellung (120) der Zielperson ein 3D-Gitter ist, das basierend auf dem monokularen Video (110) erzeugt wird.

11. Verfahren nach einem der Ansprüche 1 bis 10, wobei das Mehrfachansicht-Diffusionsmodell (170) mit einem Mehrfachansicht-Videodatensatz trainiert wird.

12. Vorrichtung zum Rekonstruieren eines 3D-Avatars, umfassend einen Prozessor, der dazu konfiguriert ist, die Schritte des Verfahrens nach einem der Ansprüche 1 bis 11 umzusetzen.

13. Computerprogramm mit Anweisungen zum Durchführen der Schritte des Verfahrens nach einem der Ansprüche 1 bis 11, wenn das Programm von einem Computer durchgeführt wird.

14. Aufzeichnungsmedium, das von einem Computer lesbar ist und auf dem ein Computerprogramm aufgezeichnet ist, das Anweisungen zum Durchführen der Schritte des Verfahrens nach einem der Ansprüche 1 bis 11 umfasst, wenn sie von einem Computer durchgeführt werden.

## Revendications

1. Procédé mis en œuvre par ordinateur pour reconstruire un avatar 3D pouvant être animé d'un sujet à partir d'une vidéo monoculaire (110) comprenant les étapes suivantes :
- (S10) acquérir une vidéo monoculaire (110) du sujet capturée à partir d'une vue de référence (101) unique ;
- (S20) estimer une représentation morphable paramétrique (120) du sujet sur la base de la vidéo monoculaire (110) ;
- (S30) associer des primitives géométriques 3D (130) à la représentation morphable paramétrique (120) du sujet, les primitives géométriques 3D constituant des éclaboussures gaussiennes 3D de l'avatar ; et
- (S40) générer un ensemble d'images rendues (140) du sujet dans des vues cibles (109) sur la base des primitives géométriques 3D (130) ;
- (S50) générer un ensemble de cartes normales (150) du sujet rendu dans les vues cibles (109) en utilisant la représentation morphable paramétrique (120) ;
- (S60) générer un ensemble d'images de pseudo-réalité de terrain (160) du sujet dans les vues cibles (109) sur la base d'une image d'entrée du sujet extraite de la vidéo monoculaire (110) en utilisant un modèle de diffusion multi-vues (170) conditionné par l'ensemble d'images rendues (140) et l'ensemble de cartes normales (150) ; et
- (S70) ajuster de manière itérative les primitives géométriques 3D (130) en optimisant de manière itérative la qualité de l'ensemble d'images rendues (140) en utilisant l'ensemble d'images de pseudo-réalité de terrain (160), dans lequel l'ajustement des primitives géométriques 3D contribue à la reconstruction de l'avatar 3D pouvant être animé.

2. Procédé selon la revendication 1, dans lequel l'ensemble d'images rendues (140) comprend de multiples images rendues du sujet dans différentes vues cibles (109).

3. Procédé selon la revendication 2, dans lequel l'ensemble d'images de pseudo-réalité de terrain (160) comprend de multiples images du sujet correspondant aux différentes vues cibles.

4. Procédé selon l'une des revendications 1 à 3, dans lequel l'étape (S70) d'ajustement des primitives géométriques 3D (130) implique l'utilisation d'une fonction de perte évaluant les différences entre l'ensemble d'images rendues (140) qui sont rendues à partir des vues cibles (109) et l'ensemble d'images de pseudo-réalité de terrain (160).

5. Procédé selon l'une des revendications 1 à 4, dans lequel l'étape (S70) d'ajustement des primitives géométriques 3D (130) implique l'utilisation d'une fonction de perte évaluant les différences entre une image du sujet dans la vue de référence (101) unique extraite de la vidéo monoculaire (110) et une image rendue du sujet qui est rendue à partir de la même vue de référence (101) en utilisant les primitives géométriques 3D (130).

6. Procédé selon l'une des revendications 1 à 5, dans lequel l'étape (S60) de génération d'un ensemble d'images de pseudo-réalité de terrain (160) du sujet dans les vues cibles sur la base d'une image d'entrée du sujet extraite de la vidéo monoculaire (110) en utilisant un modèle de diffusion multi-vues (170) conditionné par l'ensemble de cartes normales (150) comprend ce qui suit :
- coder l'ensemble d'images rendues (140) en caractéristiques latentes du modèle de diffusion multi-vues (170), et ajouter du bruit aux caractéristiques latentes pour générer des caractéristiques latentes bruitées ; et
- débruiter itérativement les caractéristiques latentes bruitées pour générer l'ensemble d'images de pseudo-réalité de terrain (160).

7. Procédé selon la revendication 6, dans lequel l'étape (S60) de génération d'un ensemble d'images de pseudo-réalité de terrain (160) du sujet dans les vues cibles (109) sur la base d'une image d'entrée du sujet extraite de la vidéo monoculaire (110) en utilisant un modèle de diffusion multi-vues (170) conditionné par l'ensemble de cartes normales (150) comprend ce qui suit :
- coder l'image d'entrée en caractéristiques latentes du modèle de diffusion multi-vues (170) en utilisant un plongement CLIP ; et
- coder l'ensemble de cartes normales (150) en caractéristiques latentes du modèle de diffusion multi-vues (170) en utilisant un codeur variationnel.

8. Procédé selon l'une des revendications 6 ou 7, dans lequel la résolution de l'ensemble d'images de pseudo-réalité de terrain (160) est augmentée en utilisant un modèle de diffusion de sur-échantillonneur latent (171) recevant la sortie du modèle de diffusion multi-vues (170).

9. Procédé selon l'une des revendications 1 à 8, dans lequel les primitives géométriques 3D sont générées en gaussiennes 3D en utilisant un modèle de reconstruction d'éclaboussures gaussiennes 3D.

10. Procédé selon la revendication 9, dans lequel la représentation morphable paramétrique (120) du sujet est générée par maillage 3D sur la base de la vidéo monoculaire (110).

11. Procédé selon l'une des revendications 1 à 10,
dans lequel le modèle de diffusion multi-vues (170) est entraîné sur un ensemble de données vidéo multi-vues.

12. Dispositif de reconstruction d'avatar 3D comprenant un processeur configuré pour mettre en œuvre les étapes du procédé selon l'une des revendications 1 à 11.

13. Programme informatique comportant des instructions pour exécuter les étapes du procédé selon l'une des revendications 1 à 11 lorsque ledit programme est exécuté par un ordinateur.

14. Support d'enregistrement lisible par un ordinateur sur lequel est enregistré un programme informatique comportant des instructions pour exécuter les étapes du procédé selon l'une des revendications 1 à 11, lorsqu'il est exécuté par un ordinateur.
